# EUROPÄISCHE PATENTANMELDUNG

(11) **EP 2 200 048 A1**
(43) Veröffentlichungstag der Anmeldung: **23.06.2010**
(21) Anmeldenummer: 08291201.5
(22) Anmeldetag: 17.12.2008
(51) Int. Cl.: H01B 12/16

(54) **Anordnung mit mindestens einem supraleitfähigen Kabel**

(71) Anmelder: Nexans, 75008 Paris (FR)
(72) Erfinder: Soika, Rainer, 30559 Hannover (DE); Schippl, Klaus, D-30659 Hannover (DE)
(74) Vertreter: Döring, Roger

(57) **Zusammenfassung**

Es wird eine Anordnung mit mindestens einem supraleitfähigen Kabel (SK) angegeben, welches unter Einschluß eines Freiraums (FR) zum Durchleiten eines Kühlmittels von einem Kryostat (KR) umgeben ist, der aus zwei konzentrisch zueinander angeordneten metallischen Rohren (1,2) besteht, zwischen denen eine Vacuumisolierung (3) angeordnet ist. In dem Freiraum (FR) des Kryostats (KR) ist mindestens ein Rohr (RO) angeordnet, durch das eine vom in den Kryostat (KR) eingespeisten Kühlmittel getrennte Rückführung desselben vom fernen Ende der Anordnung zum Einspeisepunkt des Kühlmittels in den Kryostat (KR) am nahen Ende der Anordnung gegeben ist.

## Beschreibung

Die Erfindung bezieht sich auf eine Anordnung mit mindestens einem supraleitfähigen Kabel, welches unter Einschluß eines Freiraums zum Durchleiten eines Kühlmittels von einem Kryostat umgeben ist, der aus zwei konzentrisch zueinander angeordneten metallischen Rohren besteht, zwischen denen eine Vacuumisolierung angeordnet ist (WO 03/052775 A1).

Ein supraleitfähiges Kabel hat in heutiger Technik elektrische Leiter aus einem Verbundwerkstoff, welcher keramisches Material enthält, das bei ausreichend tiefen Temperaturen in den supraleitfähigen Zustand übergeht. Der elektrische Gleichstromwiderstand eines entsprechend aufgebauten Leiters ist bei ausreichender Kühlung Null, solange eine bestimmte Stromstärke nicht überschritten wird. Geeignete keramische Materialien sind beispielsweise mit seltenen Erden dotierte Materilien, die unter der Bezeichnung ReBCO (Rare-earth-Barium-Kupfer-Oxid) bekannt geworden sind, zu denen insbesondere YBCO (Yttrium-Barium-Kupfer-Oxid) gehört. Ein anderes dieser supraleitfähigen Materialien ist beispielsweise BSCCO (Wismut-Strontium-Kalzium-Kupfer-Oxid). Ausreichend niedrige Temperaturen, um ein derartiges Material in den supraleitfähigen Zustand zu bringen, liegen beispielsweise zwischen 67 K und 110 K. Geeignete Kühlmittel sind beispielsweise Stickstoff, Helium, Neon und Wasserstoff oder Gemische dieser Stoffe.

In der Anordnung einsetzbare supraleitfähige Kabel können alle bekannten Kabel mit warmem oder kaltem Dielektrikum sein. Es kann sich auch um ein sogenanntes Triaxial-Kabel handeln, wie es beispielsweise in der WO 2004/013868 A2 beschrieben ist.

In der Anordnung nach der eingangs erwähnten WO 03/052775 A1 ist ein supraleitfähiges Kabel mit kaltem Dielektrikum eingesetzt. Es besteht aus einem auf einen rohrförmigen Träger aufgebrachten Innenleiter und einem konzentrisch dazu angeordneten Schirm, die durch das Dielektrikum (Isolierung) voneinander getrennt und auf Abstand gehalten sind. Der Leiter und der Schirm bestehen beispielsweise aus Bändern aus supraleitfähigem Material, wie YBCO oder BSCCO, die dicht nebeneinander liegend mit langem Schlag um eine Unterlage herumgewickelt sind. Diese Schrift befaßt sich im wesentlichen mit der Durchverbindung des Kryostats, in welchem das Kabel untergebracht ist, wenn mindestens zwei Längen einer solchen Anordnung miteinander verbunden werden sollen. Über die Einspeisung eines Kühlmittels in den Freiraum des Kryostats und über Maßnahmen zum Aufrechterhalten der benötigten tiefen Temperatur des Kühlmittels sind in der Schrift keine Angaben gemacht.

Der Erfindung liegt die Aufgabe zugrunde, für eine Anordnung der eingangs geschilderten Art eine einfache Möglichkeit zur Aufrechterhaltung der zur Kühlung des supraleitfähigen Kabels ausreichenden tiefen Temperatur des Kühlmittels anzugeben.

Diese Aufgabe wird gemäß der Erfindung dadurch gelöst, daß in dem Freiraum des Kryostats mindestens ein Rohr angeordnet ist, durch das eine vom in den Kryostat eingespeisten Kühlmittel getrennte Rückführung desselben vom fernen Ende der Anordnung zum Einspeisepunkt des Kühlmittels in den Kryostat am nahen Ende der Anordnung gegeben ist.

In dieser Anordnung wird das Kühlmittel nach Durchströmen einer vorgebbaren Länge des Kryostats bzw. des Kabels und einer noch zulässigen Erwärmung auf einfache Art und Weise an den Einspeiseort zurückgeführt, an welchem es mit dort vorhandenen Aggregaten wieder auf Betriebstemperatur heruntergekühlt wird und dann erneut in den Kryostat eingespeist werden kann. Das Rohr wird zusammen mit mindestens einem supraleitfähigen Kabel innerhalb eines Kryostats angebracht, so daß beim Verlegen der Anordnung nur ein einziges Bauteil verlegt werden muß. Fertigung und Verlegung der Anordnung sind dementsprechend einfach. Bei richtigem Aufbau und richtiger Dimensionierung des Rohres ergeben sich im Kryostat außerdem verminderte thermische Verluste.

Zur Verbesserung des Wirkungsgrads der Anordnung kann ein als Metallrohr ausgeführtes Rohr auf der dem Kühlmittel zugewandten Oberfläche eine Isolierschicht aus einem geeigneten thermischen Isoliermaterial aufweisen, das bei den tiefen Temperaturen des Kühlmittels, beispielsweise bis zu -200 °C, beständig ist. Geeignet sind beispielsweise in der Supraleitertechnik bekannte Papiere, die auch mit Polypropylen beschichtet sein können, sowie Kunststoffe, wie beispielsweise Polytetrafluorethylen (PTFE). Das Rohr kann insgesamt auch aus einem derartigen Kunststoff bestehen.

In bevorzugter Ausführungsform besteht das Rohr aus zwei konzentrisch zueinander angeordneten Metallrohren, zwischen denen eine bei den tiefen Temperaturen des Kühlmittels, beispielsweise bis zu -200 °C, beständige Isolierung angeordnet ist. Der Zwischenraum zwischen den beiden Teilrohren ist vorzugsweise evakuiert. Ein solches Rohr ist thermisch so gut isoliert, daß ein Wärmeaustausch zwischen den beiden Fluiden im Kryostat einerseits und im Rohr andererseits nahezu vollständig vermieden ist.

Ausführungsbeispiele des Erfindungsgegenstandes sind in den Zeichnungen dargestellt.

Es zeigen:
Fig. 1 in schematischer Darstellung einen Schnitt durch eine Anordnung nach der Erfindung.
Fig. 2 einen Schnitt durch eine gegenüber Fig. 1 abgewandelte Ausführungsform der Anordnung.
Fig. 3 bis 5 Querschnitte von unterschiedlich aufgebauten Rohren für die Anordnung nach den Fig. 1 und 2.

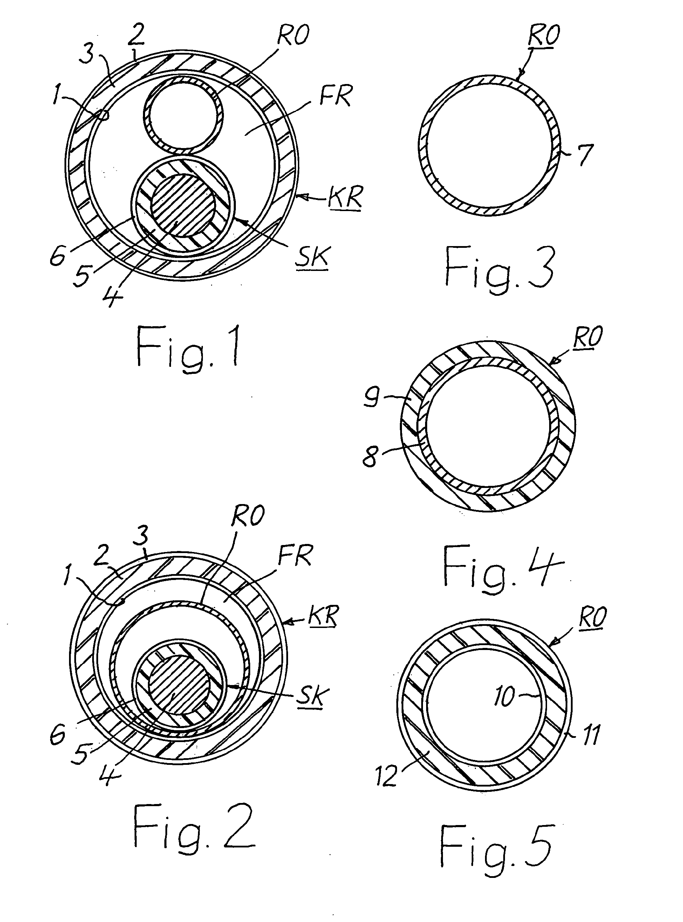

Die Anordnung nach Fig. 1 besteht aus einem Kryostat KR, in dem und Freilassung eines Freiraums FR ein supraleitfähiges Kabel SK und ein Rohr RO angeordnet sind. Im dargestellten Ausführungsbeispiel ist das Kabel SK - stellvertretend für alle möglichen Ausführungsformen - ein supraleitfähiges Kabel mit kaltem Dielektrikum.

Der Kryostat KR ist aus zwei koaxial zueinander angeordneten metallischen Rohren 1 und 2 aufgebaut, zwischen denen sich eine Vakuumisolierung 3 befindet. Die Rohre 1 und 2 bestehen vorzugsweise aus Edelstahl. Sie können quer zu ihrer Längsrichtung gewellt sein.

Das supraleitfähige Kabel SK weist einen supraleitfähigen Leiter 4, ein denselben umgebendes als Isolierung wirkendes Dielektrikum 5 und einen über dem Dielektrikum 5 angeordneten supraleitfähigen Schirm 6 auf. Leiter 4 und Schirm 6 können beispielsweise aus YBCO oder BSSCO bestehen.

Das Rohr RO ist gemäß der Darstellung in Fig. 1 neben dem Kabel SK bzw. parallel zu demselben im Freiraum FR des Kryostats KR angeordnet. Das Kühlmittel wird bei dieser Ausführungsform der Anordnung durch das Rohr RO zurückgeleitet. In einer abgewandelten Ausführungsform der Anordnung nach Fig. 2 kann das Rohr RO das Kabel SK auch umschließen. Bei dieser Ausführungsform der Anordnung wird das in den Kryostat KR eingespeiste Kühlmittel vorzugsweise durch das Rohr RO geleitet. Der freie Zwischenraum ZW zwischen Rohr RO und Kryostat KR dient in diesem Fall zur Rückführung des Kühlmittels.

Das Rohr RO kann gemäß Fig. 3 in einer einfachen Ausführungsform als einteiliges Rohr 7 mit nur einer Wandung ausgeführt sein. Er kann aus Metall, vorzugsweise aus Edelstahl, oder aus Kunststoff bestehen. In der Ausführungsform als Metallrohr kann das Rohr RO quer zu seiner Längsrichtung gewellt sein. Bei der Ausführungsform als Kunststoffrohr muß ein Kunststoff verwendet werden, der bei den tiefen Temperaturen des Kühlmittels von beispielsweise bis zu -200 °C beständig ist. Ein solcher Kunststoff ist beispielsweise PTFE.

Bei der Ausführungsform nach Fig. 4 kann das Rohr RO auch ein Metallrohr 8 sein, das bei seiner Anordnung nach Fig. 1 neben dem Kabel SK außen mit einer thermischen Isolierung 9 versehen ist, die bei Temperaturen von beispielsweise bis zu -200 °C beständig ist. Bei der Ausführungsform der Anordnung nach Fig. 2 läge die Isolierung 9 mit Vorteil an der inneren Oberfläche des Rohres RO. Geeignete Materialien für die Isolierung 9 sind beispielsweise Papier und mit Polypropylen beschichtetes Paper, das jeweils in Bandform in mehreren Lagen um das Metallrohr 8 herumgewickelt ist. Die Isolierung 9 kann auch aus einem beispielsweise bis -200 °C beständigen Kunststoff bestehen, beispielsweise aus PTFE.

Die bevorzugte Ausführungsform des Rohres RO ist in Fig. 5 dargestellt. Es besteht aus zwei koaxial zueinander angeordneten Teilrohren 10 und 11, zwischen denen eine thermische Isolierung 12 angebracht ist. Die beiden Teilrohre 10 und 11 bestehen vorzugsweise aus Edelstahl. Sie können insbesondere quer zu ihrer Längsrichtung gewellt sein. Die Isolierung 12 ist mit Vorteil als in der Supraleitertechnik bekannte Vakuumisolierung ausgeführt. Der Zwischenraum zwischen den Teilrohren 10 und 11, die durch eine Abstandshalterung koaxial zueinander gehalten werden, ist dann also evakuiert.

Bei der Ausführungsform des Rohres RO nach Fig. 5 sind die beiden Fluidströme, das Kühlmittel im Kryostat KR einerseits und das in Gegenrichtung strömende erwärmte Kühlmittel im Rohr RO andererseits thermisch nahezu vollständig voneinander getrennt, so daß kein Wärmeaustausch zwischen den beiden Fluiden stattfinden kann. Die Temperatur des Kühlmittels wird dadurch nicht durch das zurückströmende wärmere Kühlmittel beeinflußt.

In den Ausführungsbeispielen nach den Fig. 1 und 2 sind im Kryostat KR ein supraleitfähiges Kabel SR und ein Rohr RO dargestellt. Es können in einem Kryostat KR auch zwei oder mehr supraleitfähige Kabel sowie zwei oder mehr Rohre untergebracht sein. Das Rohr RO bzw. die Rohre kann bzw. können auch einen von der Kreisform abweichenden Querschnitt haben.

## Patentansprüche

1. Anordnung mit mindestens einem supraleitfähigen Kabel, welches unter Einschluß eines Freiraums zum Durchleiten eines Kühlmittels von einem Kryostat umgeben ist, der aus zwei konzentrisch zueinander angeordneten metallischen Rohren besteht, zwischen denen eine Vacuumisolierung angeordnet ist, **dadurch gekennzeichnet, daß** in dem Freiraum (FR) des Kryostats (KR) mindestens ein Rohr (RO) angeordnet ist, durch das eine vom in den Kryostat (KR) eingespeisten Kühlmittel getrennte Rückführung desselben vom fernen Ende der Anordnung zum Einspeisepunkt des Kühlmittels in den Kryostat (KR) am nahen Ende der Anordnung gegeben ist.

2. Anordnung nach Anspruch 1, **dadurch gekennzeichnet, daß** das Rohr (7) aus Metall besteht.

3. Anordnung nach Anspruch 2, **dadurch gekennzeichnet, daß** das Rohr (7) quer zu seiner Längsrichtung gewellt ist.

4. Anordnung nach Anspruch 2 oder 3, **dadurch gekennzeichnet, daß** das Rohr (8) außen mit einer Isolierung (9) aus einem bei durch das Kühlmittel gegebenen niedrigen Temperaturen beständigen Material versehen ist.

5. Anordnung nach Anspruch 1, **dadurch gekennzeichnet, daß** das Rohr (7) aus einem bei durch das Kühlmittel gegebenen niedrigen Temperaturen beständigen Kunststoff besteht.

6. Anordnung nach Anspruch 1, **dadurch gekennzeichnet, daß** das Rohr (7) aus zwei koaxial zueinander angeordneten metallischen Teilrohren (10, 11) besteht, zwischen denen eine bei durch das Kühlmittel gegebenen niedrigen Temperaturen beständige Isolierung (12) angebracht ist.

7. Anordnung nach Anspruch 6, **dadurch gekennzeichnet, daß** die Teilrohre (10, 11) quer zu ihrer Längsrichtung gewellt sind.

8. Anordnung nach einem der Ansprüche 1 bis 7, **dadurch gekennzeichnet, daß** das Rohr (RO) das supraleitfähige Kabel (SK) umschließt.
